# EUROPÄISCHE PATENTSCHRIFT

(11) **EP 2 394 511 B1**
(45) Veröffentlichungstag und Bekanntmachung des Hinweises auf die Patenterteilung: **21.08.2013**
(21) Anmeldenummer: 11169399.0
(22) Anmeldetag: 10.06.2011
(51) Int. Cl.: A01N 47/16, A01P 7/00

(54) **Synergistisch wirkende Mischungen aus alpha,omega-Aminoalkohol-Enantiomeren, deren Herstellung und ihre Verwendung in insekten- und milbenabwehrenden Zubereitungen**
Synergistic mixtures of alpha, omega-amino alcohol enantiomers, their production and use of in preparations for combating insects and mites
Mélanges à effet synergétique constitués d'énantiomères d'alcool aminé alpha-oméga, leur fabrication et leur utilisation dans des préparations pour la lutte contre les insectes et les acariens

(30) Priorität: 12.06.2010 DE 102010023586
(43) Veröffentlichungstag der Anmeldung: 14.12.2011
(73) Patentinhaber: Saltigo GmbH, 40764 Langenfeld (DE)
(72) Erfinder: Koch, Burkhard, 50823 Köln (DE); Job, Andreas, 50858 Köln (DE); Müller, Nikolaus, 55595 Wallhausen (DE)
(74) Vertreter: Pettrich, Klaus-Günter

(56) Entgegenhaltungen:
- WO-A1-2008/046889
- NATARAJAN R ET AL: "Chirality index, molecular overlay and biological activity of diastereoisomeric mosquito repellents", PEST MANAGEMENT SCIENCE, WILEY & SONS, BOGNOR REGIS; GB, Bd. 61, Nr. 12, 1. Dezember 2005 (2005-12-01), Seiten 1193-1201, XP002472904, ISSN: 1526-498X, DOI: 10.1002/PS.1116

## Beschreibung

Die vorliegende Erfindung betrifft synergistisch wirkender Mischungen aus enantiomeren-angereichtern α,ω-Aminoalkohol-Derivaten enthaltend 2 Enantiomere im Gewichtsverhältnis 1:1 oder 3 Enantiomere im Gewichtsverhältnis 1:1:1, der Verbindung 1-sek-Butyloxycarbonyl-2-(2-hydroxyethyl)-piperidin (auch als 1-Piperidin-carboxylsäure-2-(2-hydroxyethyl)-1-methylpropylester bezeichnet; CAS-Nr. 119515-38-7), deren wobei die Racematmischung die alle 4 Enantiomere im Gewichtsverhältnis 1:1:1:1 enthält, ausgenommen ist, deren Herstellung und deren Verwendung in insekten- und milbenabwehrenden Mitteln. 1-sek-Butyloxy-carbonyl-2-(2-hydroxyethyl)-piperidin weist die folgende Struktur der Formel (1) auf

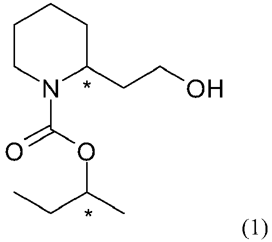

Das Racemat der Verbindung (1) ist unter dem Handelsnamen Saltidin® (andere Namen: Picaridin, Icaridin, früher Bayrepel®) bekannt.

Mittel, die Insekten oder Milben abweisen (Repellents), haben die Aufgabe, schädliche oder lästige Gliederfüßler von Berührung sowie vom Stechen und Saugen oder Beißen an für sie anlockenden Oberflächen, etwa an der Haut von Tieren und Menschen, abzuhalten, wenn diese zuvor mit solchen Mitteln behandelt wurden.

Als Repellents wurden bereits zahlreiche Wirkstoffe vorgeschlagen (vergl. z. B. K.H. Büchel in Chemie der Pflanzenschutz- und Schädlingsbekämpfungsmittel; Herausgeber: R. Wegler, Bd. 1, Springer Verlag Berlin, Heidelberg, New York, 1970, S. 487 ff).

Besonders bekannt und seit längerer Zeit in Gebrauch sind 3-Methyl-benzoesäurediethylamid (DEET), Dimethylphthalat und 2-Ethylhexandiol-1,3, von denen vor allem das DEET in der Praxis eine erhebliche Bedeutung erlangt hat (siehe z.B. R. K. Kocher, R.S. Dixit, C.I. Somaya; Indian J. Med. Res. 62,1(1974)).

Weiterhin sind bekannt substituierte α,ω-Aminoalkohol-Derivate in Form des racemischen Gemisches der Einzelenantiomeren, wie sie bei der chemischen Synthese anfallen (EP-A- 289 842). Diese besitzen auch in Form der eingesetzten racemischen Isomerengemische eine starke insekten- und milbenabweisende Wirkung. Als besonders wirksam hat sich das bereits genannte Saltidin® gezeigt.

Ein Nachteil aller bekannten Repellents ist ihre zum Teil relativ kurze (nur wenige Stunden) anhaltende Dauerwirkung.

In der EP-A-2086327 und in Pest. Manag. Sci. 61,1193-1201 (2005) wird die Herstellung und Verwendung einzelner enantiomerenangereicherter α ,ω-Aminoalkohol-Derivate als insekten- und milbenabwehrende Mittel beschrieben. Die Verwendung einzelner Enantiomere zeigte gegenüber dem Racemat teilweise eine verlängerte Wirksamkeit. Es wurden jedoch nur einzelne Enantiomere auf ihre Wirksamkeit im Vergleich zum racemischen Gemisch untersucht.

Die synergistische Wirkweise von Mischungen von Einzelenantiomeren ist in der Pharmakologie und Toxikologie in Einzelfällen literaturbekannt. So wird z.B. in Proc Natl Acad Sci 1979, 76 (9), 4280-4 die synergistische zytotoxische und mutagene Wirkweise der Mischungen von Enantiomeren von Benzo[a]pyren-4,5-oxid beschrieben.

Ein Beispiel für komplementäre Wirkweise von Enantiomeren findet sich dagegen in Pharmacol Exp Ther 1993, 267 (1), 331-40. Die Enantiomere des Wirkstoffes Tramadol zeigen gegenüber dem Racemat teilweise eine deutlich verringerte Wirkung (komplementäre Interaktion).

Die synergistische Wirkweise von Enantiomerenmischungen als Insekten- und Milbenrepellent ist bislang jedoch unbekannt.

Aufgabe der vorliegenden Erfindung war es, Insekten- und Milbenrepellents zu finden, die gegenüber den bisher bekannten Repellents eine längere Wirksamkeitsdauer zeigen.

Überraschend wurde nun gefunden, dass bestimmte Mischungen einzelner Enantiomere von α ,ω-Aminoalkohol-Derivaten der Formel (1) eine synergistische Wirkung bezüglich der Wirkdauer als insekten- und milbenabweisendes Mittel im Vergleich zur Racematmischung besitzen. Die Verlängerung der Wirkdauer gegenüber dem racemischen Gemisch ist dabei deutlich höher, als durch einfache Addition der Wirkdauer der Einzelenantiomeren zu erwarten war.

Gegenstand der vorliegenden Erfindung sind daher insekten- und milbenabwehrende Zusammensetzungen, enthaltend 2 Enantiomere im Gewichtsverhältnis 1:1 oder 3 Enantiomere im Gewichtsverhältnis 1:1:1, ausgewählt aus der Gruppe 1-[(S)-sek.-Butyloxycarbonyl]-2-(S)-(2-hydroxyethyl)-piperidin, 1-[(R)-sek-Butyloxycarbonyl]-2-(R)-(+)-(2-hydroxyethyl)-piperidin, 1-[(S)-sek-Butoxycarbonyl]-2-(R)-(+)-(2-hydroxyethyl)-piperidin und 1-[(R)-sek-Butyloxycarbonyl]-2-(S)-(+)-(2-hydroxyethyl)-piperidin, wobei die Racematmischung die alle 4 Enantiomere im Gewichtsverhältnis 1:1:1:1 enthält, hiervon ausgenommen ist
1-sek-Butyloxycarbonyl-2-(2-hydroxyethyl)-piperidin besitzt 2 optisch aktive Kohlenstoffatome, die in Formel (1) 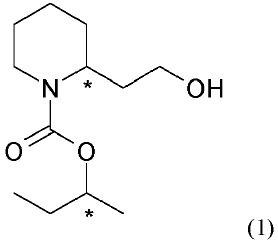 mit (*) gekennzeichnet sind. Dementsprechend besitzt diese Verbindung 4 Enantiomere mit den oben angegebenen Bezeichnungen. Die einzelnen Enantiomere werden im folgenden hinsichtlich ihrer Konfiguration mit den Abkürzungen S,S; R,R; S,R und R,S bezeichnet.

Neben einer Erhöhung der Wirksamkeit im Vergleich zur Racematmischung, die alle 4 Enantiomere im Gewichtsverhältnis (1:1:1:1) enthält, wird bei den erfindungsgemäßen Zusammensetzungen vermieden, dass nicht wirksame bzw. weniger wirksame Enantiomere zur Anwendung kommen, was bezüglich der Verträglichkeit beim Menschen von Vorteil sein kann.

Die erfindungsgemäße Zusammensetzung enthält 2 oder 3 Enantiomere, wobei die jeweiligen Enantiomere in den Gewichtsverhältnissen 1:1 oder 1:1:1 enthalten sind.

Bevorzugt sind bei den erfindungsgemäßen 2-Komponentenmischungen solche, die jeweils die Enantiomere S,S/R,S; S,R/R,S; R,S/R,R; S,S/S,R oder S,R/R,R im Gewichtsverhältnis 1:1 enthalten. Besonders bevorzugt sind dabei die 2-Komponentenmischungen, die die Enantiomere R,S/R,R; S,S/S,R oder S,R/R,R enthalten. Gegenüber der Racematmischung zeigen diese erfindungsgemäßen Zusammensetzungen eine um 21%, 15% bzw. 18% erhöhte Wirkdauer.

Bevorzugt sind bei den erfindungsgemäßen 3-Komponentenmischungen solche, die jeweils die Enantiomere R,R/R,S/S,R; S,S/R,S/S,R; S,S/S,R/R,R oder S,S/R,R/R,S im Gewichtsverhältnis 1:1:1 enthalten. Besonders bevorzugt sind dabei die 3-Komponentenmischungen, die die Enantiomere S,S/S,R/R,R; S,S/R,R/R,S oder S,S/R,S/S,R enthalten. Gegenüber der Racematmischung zeigen diese erfindungsgemäßen Zusammensetzungen eine um 28%, 25% bzw. 13 % erhöhte Wirkdauer.

Die einzelnen Enantiomere erhält man, indem man optisch aktive α,ω-Aminoalkohole (z.B. (S)- oder (R)-2-(2-hydroxyethyl)piperidin) mit an sich bekannten Chlorkohlensäureestern, die einen optisch aktiven (R)- oder (S)-sek-Butylrest enthalten, umsetzt, wie es z.B. in der EP-A-2086327 beschrieben wird.

Alternativ kann man auch aus dem Racematgemisch mit an sich bekannten Methoden die einzelnen Enantiomere isolieren, z.B. chromatographisch an geeigneten optisch aktiven Trägern. Hergestellt werden die erfindungsgemäßen Zusammensetzungen dann durch Abmischung der einzelnen Enantiomeren im gewünschten Gewichtsverhältnis.

Ein weiterer Gegenstand der Erfindung ist ein Verfahren zur Herstellung von insekten- und milbenabwehrenden Zusammensetzungen, welche 2 oder 3 Enantiomere, ausgewählt aus der Gruppe 1-[(S)-sek.-Butyloxycarbonyl]-2-(S)-(2-hydroxyethyl)-piperidin, 1-[(R)-sek-Butyloxycarbonyl]2-(R)-(+)-(2-hydroxyethyl)-piperidin, 1-[(S)-sek-Butoxycarbonyl]-2-(R)-(+)-(2-hydroxyethyl)-piperidin und 1-[(R)-sek-Butyloxycarbonyl]-2-(S)-(+)-(2-hydroxyethyl)-piperidin, enthalten, bei dem man für das 2- Komponentengemisch 2 Enantiomere im Gewichtsverhältnis 1:1 und für das 3-Komponentengemisch 3 Enantiomere im Gewichtsverhältnis 1:1 gegebenenfalls in einem Lösungsmittel wie z. B. Wasser miteinander vermischt. Bevorzugt wird das erfindungsgemäße Verfahren zur Herstellung von insekten- und milbenabwehrenden Zusammensetzungen so durchgeführt, dass man für das 2-Komponentengemisch 2 Enantiomere, z.B. die Enantiomere S,S/R,S; S,R/R,S; R,S/R,R; S,S/S,R oder S,R/R,R, im Gewichtsverhältnis 1:1 und für das 3-Komponentengemisch 3 Enantiomere, z.B. die Enantiomere R,R/R,S/S,R; S,S/R,S/S,R; S,S/S,R/R,R oder S,S/R,R/R,S, im Verhälnis 1:1:1 miteinander vermischt. Besonders bevorzugt werden im erfindungsgemäßen Verfahren zur Herstellung von 2- Komponentenmischungen die Enantiomere R,S/R,R; S,S/S,R oder S,R/R,R und im erfindungsgemäßen Verfahren zur Herstellung von 3- Komponentenmischungen die Enantiomere S,S/S,R/R,R; S,S/R,R/R,S oder S,S/R,S/S,R eingesetzt.

Die insekten- und milbenabwehrende Wirkung der erfindungsgemäßen Zusammensetzungen hält als synergistisch wirkende Mischung lange an. Sie können daher mit gutem Erfolg zur Abwehr von schädlichen oder lästigen, saugenden und beißenden Insekten und Milben verwendet werden.

Zu den saugenden Insekten gehören im wesentlichen die Stechmücken (z. B. Aedes-, Culex- und Anopheles-Arten), Schmetterlingsmücken (Phletotomen), Gnitzen (Culicoides-Arten), Kriebelmücken (Simulium-Arten), Stechfliegen (z. B. Stomoxys Calcitrans), tsetse-Fliegen (Glossina-Arten), Bremsen (Tabanus-, Haematopota- und Chrysops-Arten), Stubenfliegen (z. B. Musca domestica und Fannia canicularis), Fleischfliegen (z. B. Sarcophaga camaria), Myiasis erzeugende Fliegen (z. B. Lucilia couprina, Chrysomyia chloropyga, Hypoderma bovis, Hypoderma lineatum Dermatobia hominis, Oestrus ovis, Gasterophilus intestinalis, Cochliomyia hominovorax), Wanzen (z. B. Cimex lectularius, Rhodnius prolixus, Triatoma infestans), Läuse (z.B. Pediculus humanus, Haematipinus suis, Damalina ovis), Lausfliegen (z. B. Melaphagus orinus), Flöhe (z. B Pulex irritans, Cthenocephalides canis, Xenopsylla cheopsis) und Sandflöhe (z. B. Dermatophilus penetrans).

Zu den beißenden Insekten gehören im wesentlichen Schaben (z. B. Blattela germanica, Periplaneta americana, Blatta orientalis, Supella supellectilium), Käfer (z. B. Sitophilus granarius, Tenebrio molitor, Dermestes lardarius, Stegobium paniceum, Anobium puntactum, Hylotrupes bajulus), Termiten (z. B. Reticulitermes lucifugus) und Ameisen (z. B. Lasius niger).

Zu den Milben gehören Zecken (z. B. Ornithodorus Moubata, Ixodes ricinus, Boophilus microplus, Amblyomma hebreum) und Milben im engeren Sinne (z. B. Sarcoptes Scabiei, Dermanyssus gallinae).

Die vorliegende Erfindung betrifft somit auch die Verwendung der beschriebenen erfindungsgemäßen Zusammensetzungen zur Insekten- und Milbenabwehr.

Weiterhin betrifft die Erfindung Zubereitungen zur Insekten- und Milbenabwehr, welche die beschriebenen erfindungsgemäßen Zusammensetzungen sowie gegebenenfalls weitere Wirkstoffe, Trägerstoffe, Lösungs- und/oder Dispergiermittel, oberflächenaktive Substanzen sowie weitere Additive enthalten.

Die erfindungsgemäßen Zubereitungen können neben den erfindungsgemäßen Zusammensetzungen auch weitere Insektenabwehrmittel enthalten. Hier kommen praktisch alle üblichen Repellentien in Frage.

Im Falle der Repellentkombinationen werden bevorzugt die beschriebenen erfindungsgemäßen Zusammensetzungen als 2- oder 3-Komponentengemisch zusammen mit repellent wirkenden Carbonsäureamiden, 1,3-Alkandiolen und Carbonsäureestern verwendet. Im einzelnen seien genannt: 3-Methylbenzoesäurediethylamid (DEET), 2-Ethyl-hexandiol-1,3 und Phthalsäuredimethylester.

Die erfindungsgemäßen Zubereitungen lassen sich in allen in der Kosmetik üblichen Darreichungsformen erstellen, beispielsweise in Form von Lösungen, Emulsionen, Gelen, Salben, Pasten, Cremes, Pulvern, Stiften, Sprays oder Aerosolen aus Sprühdosen.

Für die Anwendung im nichtkosmetischen Bereich können die erfindungsgemäßen Zubereitungen z.B. in Form von Granulaten, Ölsprühmitteln oder Slow-Release-Formulierungen eingesetzt werden.

Ein weiterer Gegenstand der Erfindung ist ein Verfahren zur Herstellung von Zubereitungen zu Insekten- und Milbenabwehr, bei dem man die beschriebenen erfindungsgemäßen Zusammensetzungen mit Lösungs- und/oder Dispergiermitteln, Trägerstoffen und /oder oberflächenaktiven Substanzen und gegebenenfalls weiteren Wirkstoffen und/oder Additiven vermischt.

Die erfindungsgemäßen Zubereitungen werden bevorzugt durch Vermischen der erfindungsgemäßen Zusammensetzungen mit Lösungsmitteln, (z. B. Xylol, Chlorbenzole, Paraffine, Methanol, Ethanol, Isopropanol, Wasser), Trägerstoffen (z. B. Polyoxyethylen-Fettsäure-Ester, Polyoxyethylen-Fettalkohol-Ether, Alkylsulfonate, Arylsulfonate) und/oder oberflächenaktiven Substanzen und gegebenenfalls Additiven hergestellt.

Die Zubereitungen enthalten im allgemeinen zwischen 0,1 und 95 Gew.-% der erfindungsgemäßen Zusammensetzungen als synergistisch wirkendes 2- oder 3-Komponenengemisch, vorzugsweise zwischen 0,5 und 90 Gew.-%, besonders bevorzugt zwischen 1 und 50 Gew%, bezogen auf die Gesamtzubereitung.

Zum Schutz gegen blutsaugende Insekten oder Milben werden die erfindungsgemäßen Zubereitungen entweder auf die menschliche oder tierische Haut aufgebracht oder Kleidungsstücke oder andere Gegenstände damit behandelt. Auch als Zusatz von Imprägniermittel für beispielsweise Textilbahnen, Kleidungsstücke, Verpackungsmaterialien sowie als Zusatz zu Polier-, Putz- und Fensterreinigungsmittel sind die erfindungsgemäßen Zubereitungen geeignet.

### Beispiele

### Repellentests:

Repellent-Effektivität von Formulierungen zur Anwendung gegen Moskitos am menschlichen Arm:
Die Insekten wurden als eine aktiv beissende Population (ca. 1000 Moskitos beiderlei Geschlechts) in Käfigen (90 cm lang, 30 cm breit, 40 cm hoch, Seitenwände aus Gaze) gehalten, die 2 leichte Gewebeschleusen an der Vorderseite hatten. Die Insekten sind ausschließlich mit Zuckerwasser gefüttert worden (10 % Dextropur). Das Alter der Insekten betrug mindestens 7 Tage, die Anzahl der Insekten wurde zwei mal pro Woche durch drei Tage alte ausgewachsene Insekten aufgefüllt.

Die Bissaktivitäten wurden während der Testperiode fortlaufend stündlich durch Aussetzen eines unbehandelten Arms an die Insekten überprüft (ein zusätzlicher interner Produktstandard wurde von einem ausgesuchten Freiwilligen genutzt).

Die geringe elektrische Beleuchtung des Käfigs war aktiv von 6 Uhr morgens bis 6 Uhr abends, Licht von 6 Uhr abends bis 6 Uhr morgens. Die Temperatur betrug 25-27°C, die relative Luftfeuchtigkeit beträgt 50-70%.

Die Unterarme der Versuchspersonen wurden mit unparfürmierter Seife gewaschen, mit Wasser abgespült, dann mit einer Lösung aus 70 % Ethanol und 30 % Wasser abgespült und mit einem Handtuch getrocknet.

90cm² jedes Unterarms einer Versuchsperson wurden gleichmäßig mit 150 µl (oder 150 mg) des Testproduktes eingerieben. Sobald die Formulierung trocken war (nach ca. 5 Minuten) wurde eine Manschette mit einer Öffnung von 3,1-8 cm (25 cm²) so um den Arm gebunden, dass die Öffnung komplett über der behandelten Oberfläche lag. Die Ecken der Öffnung der Manschette waren ebenfalls mit dem Testmaterial eingerieben (200 µl) in einer Breite von 1 cm um Bisse an den Ecken zu vermeiden. Die Fläche oberhalb der Manschette wurde mit einem Tuch, das die Mücken nicht durchdringen können, geschützt. Hände wurden mit Latex-Handschuhen geschützt.

Beide Arme wurden in den Käfig durch die Gewebeschleuse eingeführt und die Anzahl der Bisse (und Landungen, falls nötig) pro Arm wurden in einer 3-minütigen Testperiode notiert. Der Test wurde stündlich bis zu 8 Mal wiederholt oder vorher beendet, falls die Wirkung aussetzte (drei oder mehr Bisse innerhalb von 3 Minuten oder während 2 nacheinander folgenden Testsequenzen).

Jeder Test bestand aus 5 Versuchspersonen.

Eingesetzt wurden Mischungen von 2 oder 3 Enantiomeren des Aminoalkohols der Struktur (1) in einer Ethanol/Wasser (1:1)-Formulierung. Die Synthese und Isolierung der einzelnen Enantiomere der Struktur (1) durch Racematspaltung sowie die Aufklärung der absoluten Konfiguration der Aminoalkohole ist in der EP-A-2086327 beschrieben.

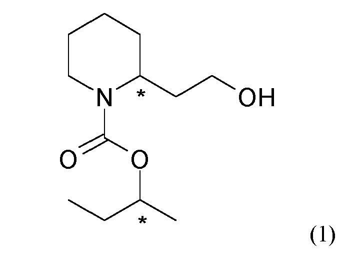

Die Ergebnisse sind in Tabelle A zusammengefasst. Als Vergleichsstandard wird das racemische Gemisch aller 4 Enantiomeren verwendet.

**Tabelle A: Repellenttest gegen Moskitos am menschlichen Unterarm**

| | | |
|---|---|---|
| Der jeweils erste Deskriptor gibt die absolute Konfiguration in der sek-Butoxycarbonyl-Einheit, der zweite Deskriptor die absolute Konfiguration im 2-Hydroxyethylpiperidin-Ring an. | | |

| Absolute Konfiguration | Gewichtsverhältnis | Erhöhung der Wirkdauer [%]* |
|---|---|---|
| S,S/R,S | 1:1 | 9 |
| S,R/R,S | 1:1 | 8 |
| R,S/R,R | 1:1 | 21 |
| S,S/S,R | 1:1 | 15 |
| S,R/R,R | 1:1 | 18 |
| R,R/R,S/S,R | 1:1:1 | 10 |
| S,S/R,S/S,R | 1:1:1 | 13 |
| S,S/S,R/R,R | 1:1:1 | 28 |
| S,S/R,R/R,S | 1:1:1 | 25 |

| | | |
|---|---|---|
| *Standard: Im Vergleich zur racemischen Mischung aller 4 Enantiomere im Gewichtsverhältnis 1:1:1:1 | | |

## Patentansprüche

1. Insekten- und milbenabwehrende Zusammensetzungen, enthaltend 2 Enantiomere im Gewichtsverhältnis 1:1 oder 3 Enantiomere im Gewichtsverhältnis 1:1:1, ausgewählt aus der Gruppe 1-[(S)-sek.-Butyloxycarbonyl]-2-(S)-(2-hydroxyethyl)-piperidin (nachfolgend S,S genannt), 1-[(R)-sek-Butyloxycarbonyl]-2-(R)-(+)-(2-hydroxyethyl)-piperidin (nachfolgend R,R genannt), 1-[(S)-sek-Butoxycarbonyl]-2-(R)-(+)-(2-hydroxyethyl)-piperidin (nachfolgend S,R genannt), 1-[(R)-sek-Butyloxycarbonyl]-2-(S)-(+)-(2-hydroxyethyl)-piperidin (nachfolgend R,S genannt), wobei die Racematmischung , die alle 4 Enantiomere im Gewichtsverhältnis 1:1:1:1 enthält, hiervon ausgenommen ist.

2. Insekten- und milbenabwehrende Zusammensetzung nach Anspruch 1, **dadurch gekennzeichnet, dass** die Zusammensetzung die 2 Enantiomere S,S/R,S; S,R/R,S; R,S/R,R; S,S/S,R oder S,R/R,R enthält.

3. Insekten- und milbenabwehrende Zusammensetzung nach Anspruch 1 , **dadurch gekennzeichnet, dass** die Zusammensetzung die 3 Enantiomere R,R/R,S/S,R; S,S/R,S/S,R; S,S/S,R/R,R oder S,S/R,R/R,S enthält.

4. Verfahren zur Herstellung von insekten- und milbenabwehrenden Zusammensetzungen, **dadurch gekennzeichnet, dass** man aus der Gruppe der Enantiomere S,S; R,R; S,R; R,S 2 Enantiomere im Gewichtsverhältnis 1:1 oder 3 Enantiomere im Gewichtsverhältnis 1:1:1 gegebenenfalls in einem Lösungsmittel miteinander vermischt wobei die Racematmischung die alle 4 Enantiomere im Gewichtsverhältnis 1:1:1:1 enthält, hiervon ausgenommen ist,

5. Verwendung von Zusammensetzungen gemäß einem der Ansprüche 1 bis 3 zur Insekten-und Milbenabwehr.

6. Zubereitungen zur Insekten- und Milbenabwehr, enthaltend eine Zusammensetzung gemäß einem der Ansprüche 1 bis 3 sowie gegebenenfalls weitere Wirkstoffe, Trägerstoffe, Lösungs- und/oder Dispergiermittel, oberflächenaktive Substanzen oder weitere Additive.

7. Zubereitungen nach Anspruch 6, **dadurch gekennzeichnet, dass** sie eine Zusammensetzung gemäß einem der Ansprüche 1 bis 3 in einer Menge im Bereich von 0,1 bis 95 Gew%, bezogen auf die Gesamtzubereitung, enthalten.

8. Zubereitungen nach Anspruch 6 oder 7, **dadurch gekennzeichnet, dass** die Zubereitungen in der Darreichungsform einer Lösung, einer Emulsion, eines Gels, einer Salbe, einer Paste, einer Creme, eines Pulvers, eines Stifts oder eines Sprays vorliegen.

9. Verfahren zur Herstellung einer Zubereitung zur Insekten- und Milbenabwehr gemäß einem der Ansprüche 6 bis 8, **dadurch gekennzeichnet, dass** man eine Zusammensetzung gemäß einem der Ansprüche 1 bis 3 mit Lösungs- und/oder Dispergiermittel, Trägerstoffen und/oder oberflächenaktiven Substanzen und gegebenenfalls weiteren Wirkstoffen und/oder Additiven vermischt.

## Claims

1. Insect- and mite-repellent compositions comprising 2 enantiomers in a weight ratio of 1:1, or 3 enantiomers in a weight ratio of 1:1:1 selected from the group of 1-[(S)-sec-butyloxycarbonyl-2-(S)-(2-hydroxyethyl)-piperidine (referred to hereinafter as S,S), 1-[(R)-sec-butyloxycarbonyl]-2-(R)-(+)-(2-hydroxyethyl)-piperidine (referred to hereinafter as R,R), 1-[(S)-sec-butaxycarbonyl]-2-(R)-(+)-(2-hydroxyethyl)-piperidine (referred to hereinafter as S,R), 1-[(R)-sec-butyloxycarbonyl]-2-(S)-(+)-(2-hydroxyethyl) -piperidine (referred to hereinafter as R,S), excluding the racemate mixture thereof comprising all 4 enantiomers in a weight ratio of 1:1:1:1.

2. Insect- and mite-repellent composition according to Claim 1, **characterized in that** the composition comprises the 2 enantiomers S,S/R,S; S,R/R,S; R,S/R,R; S,S/S,R or S,R/R,R.

3. Insect- and mite-repellent composition according to Claim 1, **characterized in that** the composition comprises the 3 enantiomers R,R/R,S/S,R; S,S/R,S/S,R; S,S/S,R/R,R or S,S/R,R/R,S.

4. Process for preparing insect- and mite-repellent compositions, **characterized in that** 2 enantiomers in a weight ratio of 1:1 or 3 enantiomers in a weight ratio of 1:1:1 from the group of the enantiomers S,S; R,R; S,R; R,S are mixed with one another, optionally in a solvent, excluding the racemate mixture thereof comprising all 4 enantiomers in a weight ratio of 1:1:1:1.

5. Use of compositions according to any of Claims 1 to 3 for insect and mite repulsion.

6. Formulations for insect and mite repulsion, comprising a composition according to any of Claims 1 to 3 and optionally further active ingredients, carriers, solvents and/or dispersants, surfactants or further additives.

7. Formulations according to Claim 6, **characterized in that** they comprise a composition according to any of Claims 1 to 3 in an amount in the range from 0.1 to 95% by weight, based on the overall formulation.

8. Formulations according to Claim 6 or 7, **characterized in that** the formulations are in the administration form of a solution, of an emulsion, of a gel, of an ointment, of a paste, of a cream, of a powder, of a stick or of a spray.

9. Process for producing a formulation for insect and mite repulsion according to any of Claims 6 to 8, **characterized in that** a composition according to any of Claims 1 to 3 is mixed with solvent and/or dispersant, carriers and/or surfactants, and optionally further active ingredients and/or additives.

## Revendications

1. Compositions insectifuges et acarifuges, contenant 2 énantiomères en le rapport pondéral 1:1 ou 3 énantiomères en le rapport pondéral 1:1:1, choisis dans le groupe constitué par la 1-[(S)-sec-butyloxycarbonyl]-2-(S)-(2-hydroxyéthyl)-pipéridine (dénommée ci-après S,S), la 1-[(R)-sec-butyloxycarbonyl]--2-(R)-(+7-(2-hydroxyéthyl)-pipéridine (dénommée ci-après R,R), la 1-[(S)-sec-butoxycarbonyl]-2-(R)-(+)-(2-hydroxyéthyl)-pipéridine (dénommée ci-après S,R), la 1-[(R)-sec-butyloxycarbonyl]-2-(S)-(+)-(2-hydroxyéthyl)-pipéridine (dénommée ci-après R,S), le mélange racémique, qui contient tous les 4 énantiomères en le rapport pondéral 1:1:1:1, étant exclu de telles compositions.

2. Composition insectifuge et acarifuge selon la revendication 1, **caractérisée en ce que** la composition contient les 2 énantiomères S,S/R,S ; S,R/R,S ; R,S/R,R ; S,S/S,R ou S,R/R,R.

3. Composition insectifuge et acarifuge selon la revendication 1, **caractérisée en ce que** la composition contient les 3 énantiomères R,R/R,S/S,R ; S,S/R,S/S,R ; S,S/S,R/R,R ; S,S/R,R/R,S.

4. Procédé pour la préparation de compositions insectifuges et acarifuges, **caractérisé en ce qu'**à partir du groupe des énantiomères S,S ; R,R ; S,R ; R,S on mélange entre eux éventuellement dans un solvant 2 énantiomères en le rapport pondéral 1:1 ou 3 énantiomères en le rapport pondéral 1:1:1, le mélange racémique, qui contient tous les 4 énantiomères en le rapport pondéral 1:1:1:1, étant exclu de tels mélanges.

5. Utilisation de compositions selon l'une quelconque des revendications 1 à 3, pour la protection contre les insectes et les acariens.

6. Préparations destinées à la protection contre les insectes et les acariens, contenant une composition selon l'une quelconque des revendications 1 à 3 ainsi qu'éventuellement d'autres substances actives, des substances de support, des solvants et/ou dispersants, des substances tensioactives ou d'autres additifs.

7. Préparations selon la revendication 6, **caractérisées en ce qu'**elles contiennent une composition selon l'une quelconque des revendications 1 à 3 en une quantité dans la plage de 0,1 à 95 % en poids, par rapport à la préparation totale.

8. Préparations selon la revendication 6 ou 7, **caractérisées en ce que** les préparations se trouvent sous la forme de présentation d'une solution, d'une émulsion, d'un gel, d'une pommade, d'une pâte, d'une crème, d'une poudre, d'un bâton ou d'une composition à pulvériser en aérosol.

9. Procédé pour la fabrication d'une préparation destinée à la protection contre les insectes et les acariens selon l'une quelconque des revendications 6 à 8, **caractérisé en ce qu'**on mélange une composition selon l'une quelconque des revendications 1 à 3 avec des solvants et/ou dispersants, des substances de support et/ou des substances tensioactives et éventuellement d'autres substances actives et/ou des additifs.
